# EUROPÄISCHE PATENTSCHRIFT

(11) **EP 3 143 350 B1**
(45) Veröffentlichungstag und Bekanntmachung des Hinweises auf die Patenterteilung: **04.03.2026**
(21) Anmeldenummer: 15738564.2
(22) Anmeldetag: 13.05.2015
(51) Int. Cl.: F26B 3/08, B01J 8/44, F26B 3/092

(54) **GASVERTEILUNGSVORRICHTUNG**
GAS DISTRIBUTION DEVICE
DISPOSITIF DE RÉPARTITION DE GAZ

(30) Priorität: 15.05.2014 AT 3642014
(43) Veröffentlichungstag der Anmeldung: 22.03.2017
(73) Patentinhaber: Technische Universität Wien, 1040 Wien (AT)
(72) Erfinder: SCHWAIGER, Karl, 3430 Tulln (AT); HAIDER, Markus, 1130 Wien (AT); HÄMMERLE, Martin, 1140 Wien (AT)
(74) Vertreter: Ellmeyer, Wolfgang
(86) Internationale Anmeldenummer: PCT/AT2015/050121
(87) Internationale Veröffentlichungsnummer: WO 2015/172172

(56) Entgegenhaltungen:
- BE-A3- 1 015 530
- DE-A1- 2 262 359
- FR-A5- 2 075 523
- FR-A5- 2 075 523
- GB-A- 1 301 103
- GB-A- 1 516 940
- US-A- 2 876 079
- US-A- 3 746 516
- US-A- 4 257 171
- US-A- 4 257 171
- US-A- 4 841 884
- US-A- 4 841 884
- US-A- 6 082 021

## Beschreibung

Die vorliegende Erfindung betrifft eine Gasverteilungsvorrichtung mit kontinuierlichem Düsenboden zur Erzeugung einer Wirbelschicht.

### STAND DER TECHNIK

Wirbelschichten sind Suspensionen eines festen Teilchenmaterials in einem von unten, der Schwerkraft entgegenwirkend, eingeblasenem Fluidisierungsgas. Unter "stationären Wirbelschichten" werden Wirbelschichten ohne nennenswerten Partikelaustrag an der Oberseite, d.h. zusammen mit dem Fluidisierungsgas, verstanden. Je feiner dabei die Partikel des Teilchenmaterials, des "Wirbelbetts", sind, umso geringer kann der Massenstrom bzw. die Geschwindigkeit des die Wirbelschicht passierenden Fluidisierungsgases sein, was sich in einer umso geringeren Hilfsleistung auswirkt. Solche Wirbelschichten finden vielerlei Anwendung in der chemischen Industrie, Petrochemie oder Energiewandlung (zirkulierende Wirbelschichten, Fließbettkühler). Die Verwendung solcher Wirbelschichtreaktoren als (Gegenstrom-)Wärmetauscher ist auch für innovative Konzepte der Energiewende interessant, wo feine Partikel als Wärmeträger- und Wärmespeichermedien verwendet werden.

Wirbelschichtreaktoren umfassen im Allgemeinen einen Düsenboden, durch den das Fluidisierungsgas aus einer darunter liegenden Windbox in den Reaktorraum eingeleitet wird, um dort durch Aufwirbelung eines Teilchenbetts die Wirbelschicht zu erzeugen. Dabei wird ganz allgemein zwischen diskreten und kontinuierlichen Düsenböden unterschieden.

Ein kontinuierlicher Düsenboden verteilt das der Windbox zugeführte Fluidisierungsgas gleichmäßig über im Wesentlichen die gesamte Bodenfläche des Reaktors, was konstruktiv mittels porösen oder entsprechend fein perforierten Boden- oder Verteilerplatten ("Lochplatten") gelöst wird: siehe z.B. GB 1.301.103 A.

Im Gegensatz dazu bestehen diskrete Düsenböden aus nebeneinander angeordneten Einzeldüsen, die nicht die gesamte Fläche abdecken, sondern das Fluidisierungsgas an diskreten Stellen (Öffnungen, Düsen) aus der Windbox durch die Verteilerplatte in den Reaktorraum einblasen, wo es sich erst über die gesamte Fläche des Reaktors verteilt; siehe z.B. US 4.841.884 A.

In US 4.257.171 A ist eine Abwandlung dieses Typs offenbart, bei der eine zweite, ebenfalls diskrete Öffnungen bzw. Düsen umfassende Verteilerplatte unterhalb der ersten angeordnet ist, um zu verhindern, dass Bettmaterial in die darunter liegende Windbox eindringt. Die Öffnungen/Düsen in der unteren Platte dieses doppelten Bodens sind nach oben hin mit einer Abdeckung versehen und darüber hinaus vorzugsweise gegenüber den oberen versetzt. Auch DE 22.62.359 A1 offenbart eine Gasverteilungsvorrichtung nach dem Stand der Technik.

Zur Erhöhung der Energieeffizienz werden Wirbelschichtreaktoren möglichst nahe den Minimum-Fluidisierungsbedingungen betrieben, d.h. bei möglichst geringem Massenstrom des Fluidisierungsgases, sodass das Gas mit einer Geschwindigkeit knapp über dem so genannten "Lockerungspunkt" den Reaktor passiert. Zur Senkung des Fluidisierungsbedarfs können beispielsweise sehr feinteilige Partikel für das Wirbelbett verwendet werden, was allerdings den Nachteil mit sich bringt, dass sie (z.B. bei Abschaltung des Fluidisierungsstroms) leichter durch die Düsen der Verteilerplatte eines diskreten Düsenbodens bzw. die Löcher/Perforationen der Verteilerplatte eines kontinuierlichen Düsenbodens in die Windbox geraten können, was im Falle ähnlicher Partikel- und Lochdurchmesser zu einer Verstopfung der Löcher/Perforationen führen kann oder eine Verschmutzung der gesamten Gasverteilungsvorrichtung bewirken und zu deren Ausfall führen kann.

Um dies zu verhindern, muss bei kontinuierlichen Düsenböden eine dem Teilchenmaterial entsprechend fein perforierte bzw. mikroporöse Verteilerplatte eingesetzt werden, die in der Anschaffung und Instandhaltung kostspielig ist, vor allem aber den Strömungswiderstand für das Fluidisierungsgas und damit den Druckverlust erhöht, wodurch höhere Betriebsdrücke und damit ein höherer Energieaufwand erforderlich sind.

Dazu kommt, dass vor allem bei horizontal strömenden stationären Wirbelschichten, wie sie etwa bei Wirbelschichtwärmetauschern zum Einsatz kommen, sich in Fließrichtung unterschiedliche Pegelstände der Wirbelschicht einstellen. Kontinuierliche Düsenböden sind aufgrund des meist laminaren Strömungsverhaltens aber nicht in der Lage, Pegelstandsvariationen auszugleichen, weswegen ein entsprechend höherer Fluidisierungsdruck eingestellt werden muss, um die Wirbelschicht auch an den Stellen relativ hoher Pegelstände aufrechterhalten zu können.

Mit einem diskreten Düsenboden könnten die variierenden Pegelstände mittels Verwendung von Düsen mit hoher Gasgeschwindigkeit ausgeglichen werden. Da jedoch bei feinen Schüttgütern der zur Fluidisierung benötigte Massenstrom sehr gering ist, würden nur sehr wenige dieser Düsen benötigt werden, um den minimal benötigten Fluidisierungsstrom zu erzeugen, womit der Abstand der Düsen viel zu groß wäre, um das feine Schüttgut über die gesamte Bodenfläche des Wirbelschichtreaktors fluidisieren zu können. Zudem ist bei feinem Schüttgut die Gefahr groß, dass feinkörnige Partikel durch die Düsen gelangen.

Ziel der vorliegenden Erfindung war es daher, die obigen Nachteile zumindest teilweise zu beseitigen.

### OFFENBARUNG DER ERFINDUNG

Dieses Ziel wird gemäß vorliegender Erfindung durch Bereitstellung einer Gasverteilungsvorrichtung zur Erzeugung einer Wirbelschicht nach Anspruch 1 erreicht, die eine Windbox und einen darüber angeordneten doppelbödigen Düsenboden, der eine mit einer Vielzahl von Düsen versehene Grundplatte und eine darüber liegende Verteilerplatte umfasst, die dazwischen einen Gasraum definieren, umfasst und die dadurch gekennzeichnet ist, dass der doppelbödige Düsenboden ein kontinuierlicher Düsenboden mit einer porösen oder perforierten Verteilerplatte ist; und der Gasraum des Düsenbodens mittels einer Vielzahl von Wänden zwischen der Grundplatte und der Verteilerplatte in eine Vielzahl von Abteilen unterteilt ist.

Eine solche Gasverteilungsvorrichtung der Erfindung mit in einzelne Abteile, die hierin mitunter als "Düsenboxen" bezeichnet werden, unterteiltem Gasraum zwischen den beiden Böden des Düsenbodens bewirkt, dass sich der Fluidisierungsgasstrom nach Beschleunigung durch die Düsen in der Grundplatte nicht über den gesamten Gasraum zwischen den Böden des doppelbödigen Düsenbodens, sondern nur in einem begrenzten Volumen zwischen den darin vorgesehenen Trennwänden verteilen und verzögert werden kann. Bei der anschließenden Passage durch die poröse oder fein perforierte Verteilerplatte wird der Gasstrom gleichmäßig über die gesamte Bodenfläche eines so ausgestatten Wirbelschichtreaktors verteilt. Auf diese Weise lassen sich Minimum-Fluidisierungsbedingungen mit geringerem Gasdruck und damit Energieaufwand als bisher aufrechterhalten, wobei die Gefahr, dass die Wirbelschicht an Stellen höherer Pegelstände zusammenfällt, minimiert wird.

Die Grundplatte des Düsenbodens kann dabei in jedem Abteil mehrere oder auch nur genau eine Düse aufweisen. In Kombination mit den jeweiligen Abständen der Trennwände zueinander und von den Rändern des Düsenbodens, d.h. der Größe der Abteile und der Düsenquerschnitte, lässt sich Stabilisierungseffekt zur sicheren Fluidisierung eines Wirbelbettes mit unterschiedlicher Pegelhöhe steuern. In besonders bevorzugten Ausführungsformen ist genau eine Düse pro Abteil vorgesehen, was die Herstellungskosten verringert. Insbesondere ist die Düse zentral inmitten des jeweiligen Abteils vorgesehen, um die gleichmäßige Verteilung des Gasstroms sicherzustellen.

Zusätzlich kann in bevorzugten Ausführungsformen der vorliegenden Erfindung neben dem Gasraum unterhalb der Verteilerplatte auch die Grundplatte und/oder die Verteilerplatte selbst unterteilt sein, d.h. aus einer Vielzahl getrennter oder trennbarer Segmente bestehen, die jeweils ein oder mehrere Abteile nach oben bzw. unten hin begrenzen. Insbesondere sind beide den Gasraum dazwischen definierenden Platten durch die Trennwände in Segmente unterteilt, so dass der gesamte kontinuierliche Düsenboden der erfindungsgemäßen Gasverteilungsvorrichtung aus solchen einzelnen Segmenten zusammengesetzt oder -setzbar ist, was in jedem Fall die Herstellungs- und Errichtungskosten senkt.

Erfindungsgemäß ist an manchen oder allen der Düsen in der Grundplatte jeweils ein die Gasströmung im Bereich der Düse stabilisierendes Rohr vorgesehen. In diesen Rohren wird das Fluidisierungsgas in eine turbulente Strömung versetzt, wodurch die Düse in einem besonders günstigen Betriebsbereich arbeiten kann. Die Rohre können in Aufwärtsrichtung sich verengende Durchmesser aufweisen, um die Strömungsgeschwindigkeit des Gases darin weiters zu erhöhen. Weiters können die Düsen am oberen Ende und/oder inmitten jeweiliger Rohre vorgesehen sein, wobei man in ersterem Fall von "Einlaufrohren" bzw. "Beschleunigungsdüsen" spricht. In einer erste Variante der Erfindung erstrecken die Rohre sich durch die Grundplatte hindurch und ragen in die Windbox hinein, um innerhalb der Windbox als Einlaufrohre für die jeweilige Düse zu fungieren.

In einer zweiten Variante der Erfindung sind die Windbox und der Düsenboden in vertikaler Richtung voneinander beabstandet und nur über die Rohre miteinander verbunden, d.h. die Grundplatte des Düsenbodens stellt nicht gleichzeitig die Deckplatte der Windbox dar. Dadurch ist gute Zugänglichkeit zu den Rohren und den darin untergebrachten Düsen gegeben, was enorme Vorteile für die Wartung und den etwaigen Austausch einzelner Düsen mit sich bringt.

Weiters können gemäß vorliegender Erfindung die Düsen unterschiedliche Innendurchmesser aufweisen, um die Strömungsgeschwindigkeit des Fluidisierungsgasstroms an den jeweiligen Pegelstand der Wirbelschicht anpassen zu können. Beispielsweise können die Düsen in horizontaler Richtung zu- oder abnehmende Innendurchmesser, aufweisen; vorzugsweise abnehmende Innendurchmesser, um abnehmende Pegelstände der Wirbelschicht durch stärkere Fluidisierung auszugleichen.

Insbesondere können - zum Teil oder ausschließlich - Düsen eingesetzt werden, deren Innendurchmesser verstellbar ist, um auf Veränderungen der Wirbelschicht, z.B. verschiedene Partikeldurchmesser bzw. Schuttgüter, reagieren zu können.

**In** einem zweiten Aspekt betrifft die Erfindung auch einen Wirbelschichtreaktor, der eine oben beschriebene Gasverteilungsvorrichtung umfasst. **In** einem solchen erfindungsgemäßen Wirbelschichtreaktor ist die Wirbelschicht vorzugsweise in eine Vielzahl von Abschnitten unterteilt, die dieselbe Erstreckung aufweisen wie die Abteile des Düsenbodens. Dies wird durch Unter- und/oder Überlaufwehre erreicht, die in derselben vertikalen Ebene oberhalb der im Gasraum des Düsenbodens befindlichen Trennwände vorgesehen sind, und hat den Vorteil, dass die Wirkung der Erfindung auf einen definierten Bereich der Wirbelschicht oberhalb des jeweiligen, durch die Trennwände gebildeten Abteils abgezielt und begrenzt werden kann.

Vorzugsweise dient ein Wirbelschichtreaktor gemäß dem zweiten Aspekt als Wärmetauscher bzw. Wärmespeicher, da die Vorteile der Erfindung hier besonders stark zur Geltung kommen.

### KURZBESCHREIBUNG DER ZEICHNUNGEN

**In** der Folge werden Ausführungsformen der vorliegenden Erfindung unter Bezugnahme auf die beiliegenden Zeichnungen detaillierter beschrieben, in denen Folgendes dargestellt ist.
Fig. 1 zeigt eine Ausführungsform eines Wirbelschichtreaktors der Erfindung mit regelmäßig unterteiltem Gasraum innerhalb des doppelbödigen Düsenbodens.
Fig. 2 zeigt eine ähnliche Ausführungsform eines Wirbelschichtreaktors wie Fig. 1, bei der zusätzlich auch die Verteilerplatte unterteilt ist.
Fig. 3 zeigt mehrere Ansichten einer Ausführungsform eines Wirbelschichtreaktors der Erfindung mit zusätzlichen Unter- und Überlaufwehren.
Fig. 4 zeigt mehrere Ansichten einer ähnlichen Ausführungsform wie Fig. 3, in der aber zusätzlich der Düsenboden und die Windbox voneinander beabstandet sind.

### DETAILLIERTE BESCHREIBUNG DER ERFINDUNG

In den Zeichnungen sind im Hinblick auf die Übersichtlichkeit der grafischen Darstellung bei Vorliegen einer Vielzahl gleicher Bauteile in der Regel nur manche davon exemplarisch mit Bezugszeichen gekennzeichnet. Für den Fachmann versteht es sich, dass es sich bei den übrigen jeweils identisch gezeichneten Bauteile um dieselben Bauteile mit derselben Funktion handelt.

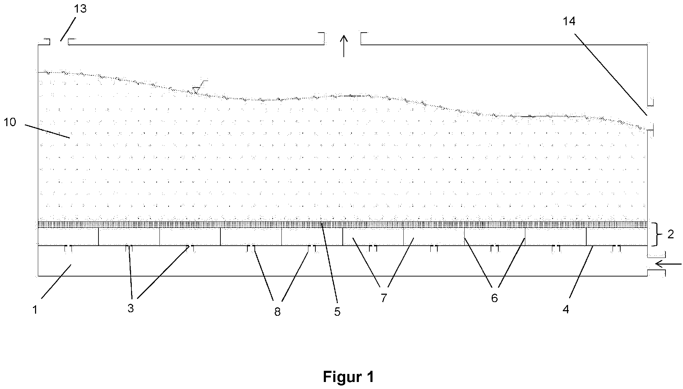

Fig. 1 zeigt eine einfache Ausführungsform der vorliegenden Erfindung, d.h. einen mit einer Gasverteilungsvorrichtung gemäß dem ersten Aspekt der Erfindung ausgestatteten Wirbelschichtreaktor gemäß dem zweiten Aspekt, umfassend eine Windbox 1 mit einem durch den horizontalen Pfeil recht unten angedeuteten Gaseinlass für Fluidisierungsgas sowie einen darüber angeordneten kontinuierlichen Düsenboden, der eine Grundplatte 4 und eine darüber liegende, poröse oder fein perforierte Verteilerplatte 5 umfasst. Als Verbindung zwischen der Windbox 1 und dem Gasraum innerhalb des Düsenbodens dient eine Vielzahl von Düsen 3.

Die Düsen 3 sind in der hier gezeigten bevorzugten Ausführungsform mit Einlaufrohren 8 versehen, die bewirken, dass das Fluidisierungsgas in Form einer turbulenten Strömung in die jeweilige Düse 3 eintritt, die somit mitunter als "Beschleunigungsdüse" bezeichnet wird. Gemäß vorliegender Erfindung ist der Gasraum zwischen den beiden Platten 4 und 5 des Düsenbodens mittels vorzugsweise vertikal verlaufender Trennwände 6 in einzelne Abteile 7 unterteilt, was die Verteilung des Fluidisierungsgases zwischen den Platten des doppelbödigen Düsenbodens einschränkt und eine Erhöhung des Fluidisierungsgas-Massenstroms bewirkt, der pro Flächeneinheit die obere Verteilerplatte 5 passiert, um das Schüttgut zur Wirbelschicht 10 zu fluidisieren.

Als Trennwände werden vorzugsweise Stahlbleche verwendet, wobei in einfachen Ausführungsformen auch ein herkömmlicher Düsenboden durch einfaches nachträgliches Einziehen von Trennwänden zu einer Ausführungsform der vorliegenden Erfindung umgerüstet werden kann. Speziell bei Reaktoren mit großflächigen kontinuierlichen Düsenböden kann es jedoch von Vorteil sein, die Gasverteilungsvorrichtung *de novo* aufzubauen, wie dies auch später noch beschrieben wird.

Das Fluidisierungsgas tritt bei der Ausführungsform aus Fig. 1 vorwiegend durch eine zentral eingezeichnete Öffnung wieder aus dem Reaktor aus, wie dies durch den vertikalen Pfeil angedeutet ist, während das zu fluidisierende Schüttgut durch eine Öffnung 13 ein- und durch eine Öffnung 14 wieder austritt. Die Führung des Fluidisierungsgases und des Schüttguts ist jedoch nicht auf derartige Ausführungsformen beschränkt.

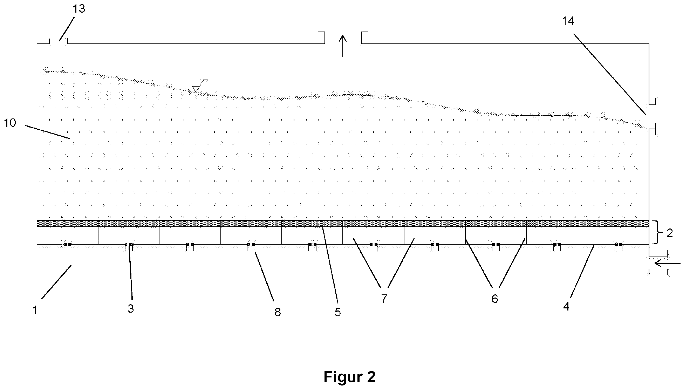

In Fig. 2 ist eine Modifikation der Ausführungsform aus Fig. 1 dargestellt, deren Unterschied darin besteht, dass durch die Trennwände 7 auch die Verteilerplatte 5 in einzelne Segmente unterteilt ist, was einen modularen Aufbau des Düsenbodens 2 ergibt. Dadurch sind auch sehr großflächige kontinuierliche Düsenböden auf kostengüstigere Weise als bisher errichtbar, wenngleich natürlich eine nachträgliche Umrüstung eines bestehenden Düsenbodens gegenüber Ausführungsformen gemäß Fig. 1 mitunter erschwert sein kann.

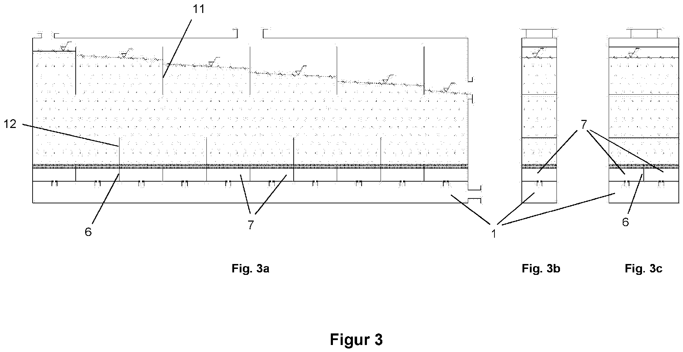

In den Fig. 3a-3c sind drei Ansichten einer weiteren Modifikation der vorliegenden Erfindung dargestellt, bei der der Reaktor im Bereich der Wirbelschicht 10 zusätzlich mit Unter- und Überlaufwehren 11 bzw. 12 ausgestattet ist. Dabei zeigt Fig. 3a eine ähnliche Seitenansicht wie in Fig. 1 und 2, während die Fig. 3b und 3c Ansichten des Reaktors in Strömungsrichtung der Wirbelschicht 10, d.h. in Längsrichtung sind. Fig. 3b zeigt eine Variante mit nur einem Abteil 7 über die Breite des Reaktors, während in der Ausführungsform aus Fig. 3c je zwei Abteile 7 nebeneinander angeordnet sind, d.h. der Düsenboden weist auch in Längsrichtung des Reaktors eine Trennwand 6 auf.

Für größerflächige Wirbelschichtreaktoren können in Breitenrichtung selbstverständlich auch drei oder mehr Abteile 7 nebeneinander angeordnet sein, aufgrund der verringerten Zugänglichkeit der Düsen 3 in den mittleren Abteilen 7 sind solche Ausführungsform aber nur in Ausnahmefällen zu bevorzugen.

Die Unterlaufwehre 11 und Überlaufwehre 12 sind in dieser bevorzugten Ausführungsform aus Fig. 3 jeweils in derselben vertikalen Ebene angeordnet wie darunter liegende Trennwände 6, so dass auch der Gasraum der Wirbelschicht 10 im entsprechenden Abstand Trennwände 6 unterteilt ist. Dies ermöglicht eine exaktere Steuerung des Fluidisierungsgasstroms über die Länge des Reaktors, speziell wenn nicht alle Düsen 3 denselben Durchmesser aufweisen, z.B. bei in Längsrichtung abnehmende Düsendurchmessern. Als Wehre 11 und 12 können aus Kostengründen einfache Widerstandsbleche dienen, es können allerdings auch verstellbare, insbesondere höhenverstellbare, Platten oder dergleichen vorgesehen sein.

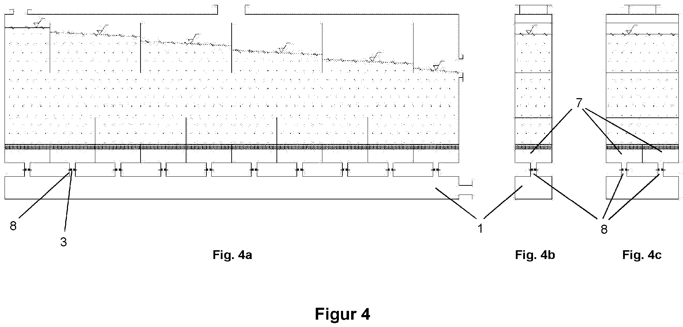

**In** Fig. 4 sind, ähnlich wie zuvor in Fig. 3, drei Ansichten einer weiteren bevorzugten Ausführungsform dargestellt, bei der der Düsenboden 2 räumlich von der Windbox 1 getrennt ist und nur über die Rohre 8 damit in Verbindung steht, innerhalb derer sich die Düsen 3 befinden. Erneut sind in den beiden Ansichten in Reaktorlängsrichtung zwei Varianten mit einem (Fig. 4b) bzw. zwei (Fig. 4c) Abteilen 7 über die Reaktorbreite dargestellt, wenngleich wiederum auch mehr als zwei Abteile in Breitenrichtung vorgesehen sein können, wobei die Beabstandung zwischen Windbox 1 und Düsenboden 2 einen besseren Zugang zu den Düsen 3 gewährleistet als bei der Ausführungsform aus Fig. 3.

Die Düsen 3 sind auf halber Höhe der Rohre 8 eingezeichnet, so dass Letztere wieder als Einlaufrohre dienen können, sind aber nicht darauf beschränkt.

## Patentansprüche

1. Gasverteilungsvorrichtung zur Erzeugung einer Wirbelschicht (10), umfassend eine Windbox (1) und einen darüber angeordneten doppelbödigen Düsenboden (2), der eine mit einer Vielzahl von Düsen (3) versehene Grundplatte (4) und eine darüber liegende Verteilerplatte (5) umfasst, die dazwischen einen Gasraum definieren, wobei der doppelbödige Düsenboden (2) ein kontinuierlicher Düsenboden mit einer porösen oder perforierten Verteilerplatte (5) ist und der Gasraum des Düsenbodens (2) mittels einer Vielzahl von Wänden (6) zwischen der Grundplatte (4) und der Verteilerplatte (5) in eine Vielzahl von Abteilen (7) unterteilt ist, wobei die Grundplatte (4) in jedem Abteil (7) eine oder mehrere Düsen (3) aufweist,
**dadurch gekennzeichnet, dass**
an manchen oder allen der Düsen (3) jeweils ein die Gasströmung im Bereich der Düse stabilisierendes Rohr (8) vorgesehen ist, wobei
a) die Rohre (8) in die Windbox (1) hinein ragen und sich durch die Grundplatte (4) hindurch aufwärts in den Düsenboden (2) hinein erstrecken; oder
b) die Windbox (1) und der Düsenboden (2) in vertikaler Richtung voneinander beabstandet und nur über an allen Düsen (3) vorgesehene Rohre (8) miteinander verbunden sind.

2. Vorrichtung nach Anspruch 1, **dadurch gekennzeichnet, dass** die Rohre (8) sich in Aufwärtsrichtung verengende Durchmesser aufweisen.

3. Vorrichtung nach Anspruch 1 oder 2, **dadurch gekennzeichnet, dass** die Grundplatte (4) und/oder die Verteilerplatte (5) aus einer Vielzahl getrennter oder trennbarer Segmente besteht, die jeweils ein oder mehrere Abteile (7) nach oben bzw. unten hin begrenzen.

4. Vorrichtung nach einem der Ansprüche 1 bis 3, **dadurch gekennzeichnet, dass** die Düsen (3) unterschiedliche Innendurchmesser aufweisen.

5. Vorrichtung nach Anspruch 4, **dadurch gekennzeichnet, dass** die Düsen (3) in Längsrichtung der Vorrichtung abnehmende Innendurchmesser aufweisen.

6. Vorrichtung nach Anspruch 4 oder 5, **dadurch gekennzeichnet, dass** der Innendurchmesser mancher oder aller Düsen (3) verstellbar ist.

7. Wirbelschichtreaktor, umfassend eine Gasverteilungsvorrichtung nach einem der Ansprüche 1 bis 6.

8. Wirbelschichtreaktor nach Anspruch 7, **dadurch gekennzeichnet, dass** die Wirbelschicht (10) durch oberhalb der Trennwände (6) in derselben vertikalen Ebene vorgesehene Unterlaufwehre (11) und/oder Überlaufwehre (12) in eine Vielzahl von Abschnitten unterteilt ist.

9. Wirbelschichtreaktor nach Anspruch 7 oder 8, **dadurch gekennzeichnet, dass** dieser als Wärmetauscher bzw. Wärmespeicher dient.

## Claims

1. A gas distribution device for creating a fluidized bed (10), which comprises a wind box (1) and a double-layered nozzle floor (2) arranged thereabove and comprising a base plate (4) provided with a plurality of nozzles (3) and a distribution plate (5) positioned thereabove, which define a gas space between them, wherein the double-layered nozzle floor (2) is a continuous nozzle floor with a porous or perforated distribution plate (5) and the gas space of the nozzle floor (2) is divided into a plurality of compartments (7) by means of a plurality of walls (6) between the base plate (4) and the distribution plate (5), the base plate (4) having one or more nozzles (3) in each compartment (7),
**characterized in that**
at some or all nozzles (3), a respective pipe (8) for stabilizing the gas flow in the area of the nozzle is provided, wherein
a) the pipes (8) extend into the wind box (1) and extend through the base plate (4) upwards into the nozzle floor (2); or
b) the wind box (1) and the nozzle floor (2) are spaced apart from each other in a vertical direction and are only connected with each other via pipes (8) provided at all nozzles (3).

2. The device according to claim 1, **characterized in that** the pipes (8) have diameters narrowing in the upward direction.

3. The device according to claim 1 or 2, **characterized in that** the base plate (4) and/or the distribution plate (5) consist of a plurality of separated or separable segments, each delimiting one or more compartments (7) above or below.

4. The device according to any one of claims 1 to 3, **characterized in that** the nozzles (3) have different inner diameters.

5. The device according to claim 4, **characterized in that** the nozzles (3) have inner diameters decreasing in the longitudinal direction of the device.

6. The device according to claim 4 or 5, **characterized in that** the inner diameters of some or all nozzles (3) are adjustable.

7. Fluidized-bed reactor, comprising a gas distribution device according to any one of claims 1 to 6.

8. Fluidized-bed reactor according to claim 7, **characterized in that** the fluidized bed (10) is separated into a plurality of sections by overflow weirs (11) and/or underflow weirs (12) provided above the separation walls (6) in the same vertical plane.

9. Fluidized-bed reactor according to claim 7 or 8, **characterized in that** it serves as a heat exchanger or a heat store.

## Revendications

1. Dispositif de distribution de gaz pour la création d'un lit fluidisé (10), comprenant une boîte à vent (1) et un fond bicouche à injecteurs (2) situé au-dessus qui comprend une plaque de base (4) équipée d'une pluralité d'injecteurs (3) et une plaque de distribution (5) disposée au-dessus, qui définisse entre-elles un espace à gaz, le fond bicouche à injecteurs (2) étant un fond à injecteurs continu avec une plaque de distribution (5) poreuse ou perforée et l'espace à gaz du fond bicouche à injecteurs (2) étant divisé en une pluralité de compartiments (7) par une pluralité de parois (6) entre la plaque de base (4) et la plaque de distribution (5), la plaque de base (4) présentant un ou plusieurs injecteurs (3) dans chaque compartiment (7),
**caractérisé en ce que**
certains ou tous les injecteurs (3) sont prévus d'un tuyau (8) stabilisant le courant de gaz dans la région de l'injecteur,
a) les tuyaux (8) s'étendant dedans la boîte à vent (1) et s'étendant à travers la plaque de base (4) vers le haut dans le fond à injecteurs (2) ; et/ou
b) la boîte à vent (1) et le fond à injecteurs (2) étant espacés l'une de l'autre dans le sens vertical et reliés entre eux uniquement par des tuyaux (8) prévus sur chaque injecteur (3).

2. Dispositif selon la revendication 1, **caractérisé en ce que** les tuyaux (8) présentent des diamètres qui se réduisent dans le sens montant.

3. Dispositif selon l'une quelconque parmi les revendications 1 ou 2, **caractérisé en ce que** la plaque de base (4) et/ou la plaque de distribution (5) se composent d'une pluralité de segments séparés ou séparables, qui chacun délimitent un ou plusieurs compartiments (7) vers le haut ou vers le bas.

4. Dispositif selon l'une quelconque parmi les revendications 1 à 3, **caractérisé en ce que** les injecteurs (3) présentent chacun un diamètre intérieure différent.

5. Dispositif selon la revendication 4, **caractérisé en ce que** les injecteurs (3) présentent des diamètres intérieurs qui se réduisent dans le sens de la longueur du dispositif.

6. Dispositif selon l'une quelconque parmi les revendications 4 ou 5, **caractérisé en ce que** le diamètre intérieur de certains ou tous les injecteurs (3) est réglable.

7. Réacteur à lit fluidisé, comprenant un dispositif de distribution de gaz selon l'une quelconque parmi les revendications 1 à 6.

8. Réacteur à lit fluidisé selon la revendication 7, **caractérisé en ce que** le lit fluidisé (10) est divisé en une pluralité de sections par des déversoirs de courant inférieur (11) et/ou des déversoirs de trop plein (12) prévus au-dessus des parois de séparation (6) dans le même plan.

9. Réacteur à lit fluidisé selon l'une quelconque parmi les revendications 7 ou 8, **caractérisé en ce qu'**il sert d'échangeur thermique ou d'accumulateur thermique.
